# EUROPÄISCHE PATENTANMELDUNG

(11) **EP 2 354 592 A1**
(43) Veröffentlichungstag der Anmeldung: **10.08.2011**
(21) Anmeldenummer: 10014874.1
(22) Anmeldetag: 23.11.2010
(51) Int. Cl.: F16H 1/20, F16H 57/02

(54) **Getriebe für Geräte mit Rotationswerkzeugen**

(30) Priorität: 09.02.2010 DE 202010002151 U
(71) Anmelder: Elektrowerkzeuge GmbH Eibenstock, 08309 Eibenstock (DE)
(72) Erfinder: Schulze, Jochen, 08309 Eibenstock (DE)
(74) Vertreter: Köhler, Tobias

(57) **Zusammenfassung**

Getriebe für Geräte mit Rotationswerkzeug, bestehend aus einem Getriebegehäuse (1), einer Antriebswelle (2) und einer koaxial zu dieser angeordneten Abtriebswelle (3) sowie einer Zwischenwelle (4) wobei die Antriebswelle (2) und die Abtriebswelle (3) auf ihrer jeweiligen Gehäuseseite mit dem Stand der Technik entsprechenden Lagern ausgestattet sind und die Antriebswelle (2) und die Abtriebswelle (3) so ausgeführt sind, dass einer dieser Wellen (2 und 3) die jeweils andere Welle (2 und 3) in sich aufnimmt und im Bereich des Überlappens von Antriebswelle (2) und Abtriebswelle (3) ein Lager eingesetzt ist und seitlich versetzt von den koaxial angeordneten Antriebswelle (2) und Abtriebswelle (3) mindestens eine Zwischenwelle (4) angeordnet ist, welche entsprechend des Standes der Technik mit Lagern im Getriebegehäuse (1) und Getriebedeckel (5) ausgestattet ist, und auf den Wellen (2,3 und 4) miteinander kämmende Getrieberäder angeordnet sind, welche den Kraftfluss von Antriebswelle (2) über Zwischenwelle (4) auf die Abtriebswelle (3) realisieren.

## Beschreibung

Die Erfindung betrifft ein vorzugsweise 2stufiges Getriebe für Geräte mit Rotationswerkzeug.

Geräte mit Rotationswerkzeug sind vorzugsweise als Handgerät ausgeführt. Diese Geräte sind ausgestattet mit rotierenden Werkzeugen wie beispielsweise Schleifscheiben, Polierscheiben, Spannfuttern für Bohrer oder Ähnlichem.

Bei der Konzeption dieser Produkte muss besonderer Wert gelegt werden auf eine ausgewogene Griffgestaltung und eine ausbalancierte Bauweise. Dies wird durch die Anordnung des Motors realisiert. Wichtig ist auch, dass wenig Staub aufgewirbelt wird und der Motor mit Kühlluft versorgt wird, die außerhalb des Staubbereiches angesaugt wird. Dadurch wird eine deutliche Erhöhung der Lebensdauer der Geräte erreicht.

Bei den meisten dieser Geräte ist es erforderlich, mittels eines Getriebes die Drehzahl der Arbeitsspindel zu beeinflussen.

Nachteilig bei diesen Getrieben ist, dass Anordnung und Aufbau dieser Getriebe das Gewicht und damit das Handling dieser Geräte nachteilig beeinflussen, weil ein optimales Ausbalancieren der Geräte nicht möglich ist.

Aufgabe der erfindungsgemäßen Lösung ist, ein Getriebe vorzuschlagen, welches die Nachteile des Standes der Technik behebt.

Gelöst wird diese Aufgabe durch eine Lösung gemäß des Schutzanspruches.

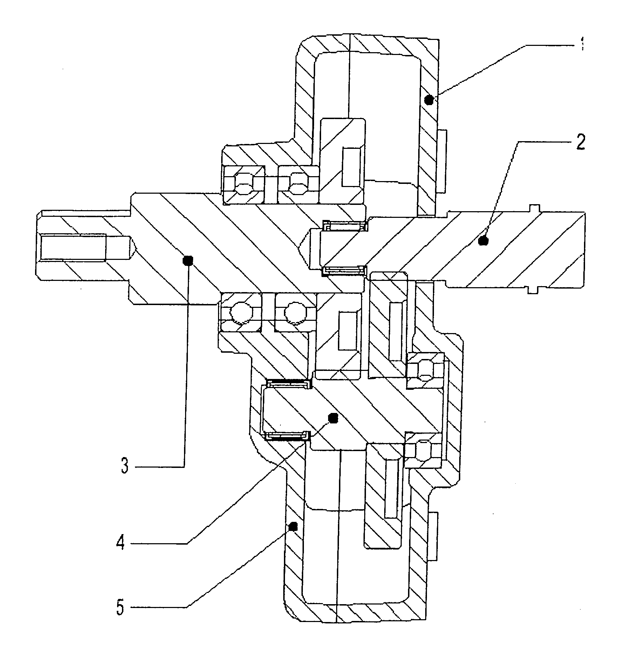

Nachfolgend soll die erfindungsgemäße Lösung anhand eines Ausführungsbeispieles eines 2stufigen Getriebes und anhand der Abbildung 1 erläutert werden.

Das erfindungsgemäße beispielhafte 2stufige Getriebe besteht in seinem Grundaufbau aus einem Getriebegehäuse 1, einer Antriebswelle 2, einer Abtriebswelle 3 sowie einer Zwischenwelle 4.

Erfindungsgemäß sind dabei die Antriebswelle 2 und die Abtriebswelle 3 koaxial zueinander angeordnet.

Dabei sind diese Wellen auf ihrer jeweiligen Gehäuseseite mit dem Stand der Technik entsprechenden Lagern ausgestattet.

Erfindungsgemäß sind die Antriebswelle 2 und die Abtriebswelle 3 gemäß der Abbildung 1 so ausgeführt, dass die Antriebswelle 2 in der Abtriebswelle 3 aufgenommen wird und die beiden Wellen somit gegenseitig als zweites Lager wirken.

Dies ist dadurch zu realisieren, dass die Abtriebswelle 3 auf dem der Antriebswelle 2 zugewandten Wellenende als Hohlwelle ausgeführt ist und die Antriebswelle 2 in ihrem Außendurchmesser so ausgeführt ist, dass sie in das als Hohlwelle ausgeführte Ende der Abtriebswelle 3 einzustecken ist.

Eine andere Art der Ausgestaltung der erfindungsgemäßen Lösung besteht darin, dass die Antriebswelle 2 so ausgeführt ist, dass die Abtriebswelle 3 in der Antriebswelle 2 gelagert ist.

In dem Bereich des Überlappens von Antriebswelle 2 und Abtriebswelle 3 wird dem Stand der Technik entsprechend ein Lager eingesetzt, welches unterschiedliche Drehzahlen von Antriebswelle 2 und Abtriebswelle 3 ermöglicht und vorzugsweise ein Nadellager ist.

Seitlich versetzt von den koaxial angeordneten Antriebswelle 2 und Abtriebswelle 3 ist eine Zwischenwelle 4 angeordnet und entsprechend des Standes der Technik mit Lagern im Getriebegehäuse 1 und Getriebedeckel 5 ausgestattet.

Der Kraftfluss im erfindungsgemäßen Getriebe erfolgt über die Antriebswelle 2 über miteinander kämmende, gemäß des Ausführungsbeispiels als Stirnräder ausgeführte Getrieberäder auf die Zwischenwelle 4. Von der Zwischenwelle 4 erfolgt der weitere Kraftfluss über Getrieberäder auf die Abtriebswelle 3.

Entsprechend der Ausführung der Außendurchmesser und der Verzahnung der Getrieberäder wird die Drehzahl der Abtriebswelle bestimmt.

Es ist auch möglich, das erfindungsgemäße Getriebe als mehrstufiges Getriebe auszuführen. Hierzu sind entsprechend herkömmlicher Getriebekunde eine entsprechende Anzahl Zwischenwellen mit den dadurch bedingten Getrieberädern einzusetzen.

## Patentansprüche

1. Getriebe für Geräte mit Rotationswerkzeug, bestehend aus einem Getriebegehäuse (1), einer Antriebswelle (2) und einer koaxial zu dieser angeordneten Abtriebswelle (3) sowie einer Zwischenwelle (4) wobei die Antriebswelle (2) und die Abtriebswelle (3) auf ihrer jeweiligen Gehäuseseite mit dem Stand der Technik entsprechenden Lagern ausgestattet sind und die Antriebswelle (2) und die Abtriebswelle (3) so ausgeführt sind, dass einer dieser Wellen (2 und 3) die jeweils andere Welle (2 und 3) in sich aufnimmt und im Bereich des Überlappens von Antriebswelle (2) und Abtriebswelle (3) ein Lager eingesetzt ist und seitlich versetzt von den koaxial angeordneten Antriebswelle (2) und Abtriebswelle (3) mindestens eine Zwischenwelle (4) angeordnet ist, welche entsprechend des Standes der Technik mit Lagern im Getriebegehäuse (1) und Getriebedeckel (5) ausgestattet ist, und auf den Wellen (2,3 und 4) miteinander kämmende Getrieberäder angeordnet sind, welche den Kraftfluss von Antriebswelle (2) über Zwischenwelle (4) auf die Abtriebswelle (3) realisieren.
